# EUROPEAN PATENT SPECIFICATION

(11) **EP 1 949 769 B1**
(45) Date of publication and mention of the grant of the patent: **11.05.2011**
(21) Application number: 06850554.4
(22) Date of filing: 14.11.2006
(51) Int. Cl.: H05H 7/22, H05H 9/00, H05H 9/02

(54) **CAST DIELECTRIC COMPOSITE LINEAR ACCELERATOR**
LINEARER BESCHLEUNIGER MIT GEGOSSENEM DIELEKTRISCHEM VERBUNDSTOFF
ACCÉLÉRATEUR LINEAIRE AVEC COMPOSITE DIÉLECTRIQUE MOULÉ

(30) Priority: 14.11.2005 US 737028 P
(43) Date of publication of application: 30.07.2008
(73) Proprietor: Lawrence Livermore National Security LLC, Livermore CA 94551-9234 (US); TPL, Inc., Alberquerque, NM 87109 (US)
(72) Inventor: SANDERS, David, M., Livermore, CA 94550 (US); SAMPAYAN, Stephen, Manteca, CA 95337 (US); SLENES, Kirk, Albuquerque, NM 87122 (US); STOLLER, H., M., Albuquerque, NM 87111 (US)
(74) Representative: Ebner von Eschenbach, Jennifer
(86) International application number: PCT/US2006/044297
(87) International publication number: WO 2007/120211

(56) References cited:
- WO-A-2005/072028
- US-A- 5 811 944
- US-B1- 6 331 194
- US-B2- 6 608 760
- SAMPAYAN S ET AL: "Development of a Compact Radiography Accelerator Using Dielectric Wall Accelerator Technology" PULSED POWER CONFERENCE, 2005 IEEE, IEEE, PI, June 2005 (2005-06), pages 50-53, XP031014888 ISBN: 0-7803-9189-6
- MATTHEW T DOMONKOS ET AL: "A Ceramic Loaded Polymer Blumlein Pulser for Compact, Rep-Rated Pulsed Power Applications" PULSED POWER CONFERENCE, 2005 IEEE, IEEE, PI, June 2005 (2005-06), pages 1322-1325, XP031015208 ISBN: 0-7803-9189-6

## Description

The United States Government has rights in this invention pursuant to Contract No. W-7405-ENG-48 between the United States Department of Energy and the University of California for the operation of Lawrence Livermore National Laboratory.

### I. REFERENCE TO PRIOR APPLICATIONS

This application claims the benefit of U.S. Provisional Application No. 60/737,028, filed November 14, 2005.

### II. FIELD OF THE INVENTION

The present invention relates to linear accelerators and more particularly to a linear accelerator having a dielectric composite that is cast to fill the space between conductor electrodes in an accelerator transmission line, with the cast dielectric composite having a high dielectric constant enabling high voltage pulse gradients to be generated along a particle acceleration axis.

### III. BACKGROUND OF THE INVENTION

Particle accelerators are used to increase the energy of electrically-charged atomic particles, e.g., electrons, protons, or charged atomic nuclei, so that they can be studied by nuclear and particle physicists. High energy electrically-charged atomic particles are accelerated to collide with target atoms, and the resulting products are observed with a detector. At very high energies the charged particles can break up the nuclei of the target atoms and interact with other particles. Transformations are produced that tip off the nature and behavior of fundamental units of matter. Particle accelerators are also important tools in the effort to develop nuclear fusion devices, as well as for medical applications such as cancer therapy.

Sampayan et al., "Development of a Compact Radiography Accelerator Using Dielectric Wall Accelerator Technology", PULSED POWER CONFERENCE, 2005 IEEE, IEEE, PI, June 2005 (2005-06), pages 50-53, XP031014888 ISBN; 0-7803-9189-6, teaches an inexpensive compact accelerator system primarily intended for pulsed radiography. Design characteristic are an 8 MeV endpoint energy, 2 kA beam current, a cell gradient of approximately 3 MV/m (for an overall accelerator length is 2-3 m), and <$1/Volt capital costs. Such designs have been made possible with the development of high specific energy dielectrics (>10J/cm³), specialized transmission line designs and multi-gap laser triggered low jitter (<1 ns) gas switches. In this geometry, the pulse forming lines, switches, and insulator/beam pipe are fully integrated within each cell to form a compact, stand-alone, stackable unit. Research and modeling, high voltage test results, and the integration concept of the cells into the radiographic system are detailed.

Matthew T Domonkos et al., "Development of a Compact Radiography Accelerator Using Dielectric Wall Accelerator Technology", PULSED POWER CONFERENCE, 2005 IEEE, IEEE, PI, June 2005 (2005-06), pages 1322-1325, XP031015208 ISBN: 0-7803-9189-6, teaches the design of compact pulsed power systems that involve the trade between size, pulse length, and pulse shape. A stacked Blumlein line with high dielectric constant material can deliver a voltage flattop to a matched load with an energy density similar to capacitor banks. By imbedding nano-scale titanate particles in an epoxy matrix, a composite material with a relative permittivity in the range of 30 to 60 may be realized without the drastic loss in dielectric strength associated with large area ceramics. So called ceramic loaded polymer dielectric employed in a Blumlein line facilitates the fabrication of a compact pulse forming line potentially suitable for driving loads of several tens of Ohms in the GW power range for greater than 100 ns. The initial efforts to fabricate and test a parallel plate Blumlein incorporating ceramic loaded polymer dielectric are described. Two single-stage parallel plate Blumlein lines were fabricated with different ceramic loading. The lines were designed to yield a 50 ns pulse into a 6.25 Ω load. The Blumlein lines were designed to be charged to 62.5 kV, and both fabricated units held the charge voltage in static tests. A small railgap switch was fabricated for use with the Blumlein lines. A mid-plane knife-edge electrode was used to trigger the switch. The results of the tests are presented along with projections for the future development of this technology.

U.S. Patent No. 6,608,760 teaches a dielectric substrate useful in the manufacture of printed wiring boards, wherein the dielectric substrate comprises at least one organic polymer having a T_{g} greater than 140° C and at least one filler material. The dielectric substrate has a dielectrics constant that varies less than 15% over a temperature range of from -55 to 125° C.

There is a need for improved linear accelerator architectures and constructions which produce the high voltage pulse gradients in a compact structure to enable the generation, acceleration, and control of accelerated particles in a compact unit. In particular, it is highly desirable to incorporate high dielectric constant materials that enable propagation of electrical wavefronts in compact Blumlein-based linear accelerators to generate the high voltage pulse gradients.

### IV. SUMMARY OF THE INVENTION

One aspect of the present invention involves a compact linear accelerator including or comprising at least one transmission line(s) extending towards a transverse acceleration axis from a first end to a second end for propagating an electrical wavefront(s) therethrough to impress a pulsed gradient along the acceleration axis, each transmission line including or comprising a first conductor having first and second ends with the second end adjacent the acceleration axis, a second conductor adjacent the first conductor and having first and second ends with the second end adjacent the acceleration axis, and a cast dielectric composite that fills the space between the first and second conductors and including or comprising at least one polymer and at least one particle filler having a dielectric constant greater than that of the polymer, whereby the polymer is an organic polymer, and the compact linear accelerator is characterised by including or comprising a second dielectric composite material filling a triple point region at a separation of the cast dielectric-composite and one of the first and second conductors.

Another aspect of the present invention involve a method of fabricating a linear accelerator, including or comprising casting at least one dielectric composite slab(s) including or comprising at least one polymer and at least one particle filler having a dielectric constant greater than that of the polymer, whereby the polymer is an organic polymer, and the method is characterised by including or comprising coating the cast dielectric composite slab(s) with a second dielectric composite material having a dielectric constant greater than that of the cast dielectric composite slab(s), and pressing two conductors against each second dielectric composite material-coated cast dielectric composite slab to extrude the second dielectric composite material out from therebetween to completely fill the triple point region with the second dielectric composite material.

And in accordance with another aspect of the present invention, the aforementioned method of fabricating a linear accelerator may further include or comprise positioning at least one conductor(s) in a mold cavity, filling the mold cavity with a dielectric composite comprising at least one organic polymer(s) and at least one particle filler(s) space having a dielectric constant greater than that of the organic polymer(s) to at least partially immerse the conductor(s) in the composites, and curing the dielectric composite to integrally cast the dielectric composite with the conductor(s).

### V. BRIEF DESCRIPTION OF THE DRAWINGS

The accompanying drawings, which are incorporated into and form a part of the disclosure, are as follows:

Figure 1 is a side cross-sectional view of a single transmission line of a linear accelerator of the present invention.

Figure 2 is a top view of the transmission line of Figure 1.

Figure 3 is a side cross-sectional view of a first illustrative embodiment of a single asymmetric Blumlein module of the linear accelerator of the present invention, with first and second cast dielectric composite layers having different dielectric constants and thicknesses.

Figure 4 is a side cross-sectional view of a second illustrative embodiment of a single symmetric Blumlein module of the present invention, with first cast and second cast dielectric composites having the same dielectric constants and the same thicknesses.

Figure 5 is a top view of a mold form with conductors positioned therein in a first exemplary accelerator fabrication method of the present invention.

Figure 6 is a top view following Figure 5 after introducing the dielectric composite material into the mold cavity of the mold form.

Figure 7, 7a is a top view following Figure 6 after removing the integrally cast dielectric composite and conductors from the mold form.

Figure 8 is a side view of a mold form with dielectric composite material therein in a second exemplary accelerator fabrication method of the present invention.

Figure 9 is a side view following Figure 8 of a cast dielectric composite produced from the mold form.

Figure 10 is a side view following Figure 9, of two cast dielectric composite layers coated with a second dielectric material and positioned in alternative arrangement with conductor electrodes to be pressed into a multilayer.

Figure 11 is a side view following Figure 10 showing the final form or a linear accelerator having the second dielectric extruded to fill the region of the triple point.

### VI. DETAILED DESCRIPTION

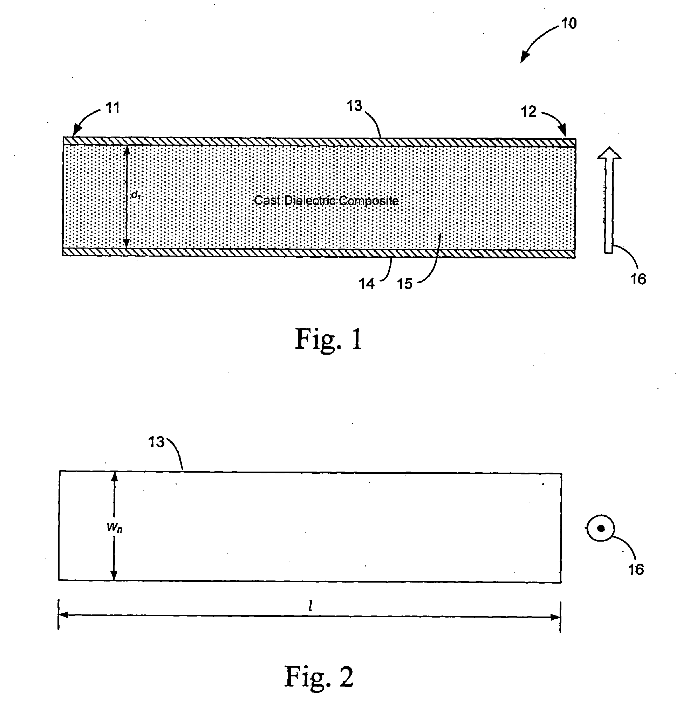

Turning now to the drawings, Figures 1-2 show an exemplary transmission line of the linear accelerator of the present invention, generally indicated at reference character 10 which generally comprises at least one such transmission line(s). The transmission line structure includes a first conductor 13, a second conductor 14 adjacent the first conductor, and a dielectric composite material 15 that fills the space between the conductors and that is cast fabricated in a manner described herein.

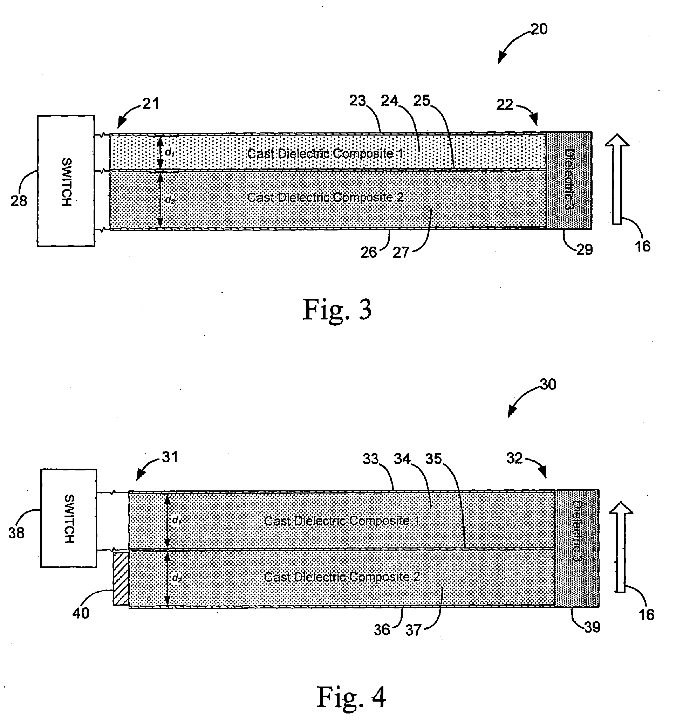

As shown, the transmission line 10 preferably has a parallel-plate strip configuration, i.e. a long narrow geometry, typically of uniform width but not necessarily so. The particular transmission line shown in Figures 1 and 2 has an elongated beam or plank-like linear configuration extending between a first end 11 and a second end 12, and having a relatively narrow width, *wₙ* compared to the length, *l*. This strip-shaped configuration of the transmission line operates to guide a propagating electrical signal wave from the first end 11 to the second end 12, and thereby control the output pulse at the second end. In particular; the shape of the wavefront may be controlled by suitably configuring the width of the module, e.g. by tapering the width (not shown). The strip-shaped configuration enables the compact accelerator to produce a flat output (voltage) pulse without distorting the pulse, and thereby prevent a particle beam from receiving a time varying energy gain. As used herein and in the claims, the first end 11 is characterized as that end which is connected to a switch (e.g. 28 in Figure 3), and the second end 12 is that end adjacent a load region, such as an output pulse region adjacent an acceleration axis 16, for particle acceleration.

Figure 3 and 4 show two exemplary embodiments of the cast dielectric composite linear accelerator of the present invention for asymmetric Blumlein operation and symmetric Blumlein operation. A typical Blumlein module has two transmission lines comprising first, second, and third conductors, with a first dielectric that fills the space between the first and second conductors, and a second dielectric that fills the space between the second and third conductors. While not shown in Figures 3 and 4, it is appreciated that the linear accelerator also includes a high voltage power supply connected to charge the second conductor strip to a high potential, and a switch (e.g. 28 in Figure 3) for switching the high potential in the second conductor strip to at least one of the first and third conductor strips so as to initiate a propagating reverse polarity wavefront(s) in the corresponding dielectric layer(s).

Figure 3 in particular shows a first exemplary embodiment of the compact linear accelerator, generally indicated at reference character 20, and comprising a single asymmetric Blumlein module (i.e. two transmission lines) connected to a switch 28. As shown in Figure 3 the narrow beam-like structure of a preferred asymmetric Blumlein module includes three planar conductors shaped into thin strips and separated by dielectric composite material also shown as elongated but thicker strips. In particular, a first planar conductor strip 23 and a middle second planar conductor strip 25 are separated by a first dielectric material 24 which fills the space therebetween. And the second planar conductor strip 25 and a third planar conductor strip 26 are separated by a second dielectric material 27 which fills the space therebetween. Preferably, the separation produced by the dielectric materials positions the planar conductor strips 23, 25 and 26 to be parallel with each other as shown.

An optional third dielectric material 29 is also shown connected to and capping the planar conductor strips and dielectric composite strips 23- 27. As such the third dielectric material 29 is a dielectric sleeve or wall characteristic of this type of accelerator, known in the art as a "dielectric wall accelerator" or "DWA". This third dielectric material 29 serves to combine the waves and allow only a pulsed voltage to be across the vacuum wall, thus reducing the time the stress is applied to that wall and enabling even higher gradients. It can also be used as a region to transform the wave, i.e., step up the voltage, change the impedance, etc. prior to applying it to the accelerator. As such, the third dielectric material 29 and the second end 22 generally, are shown adjacent a load region indicated by arrow 16. In particular, arrow 16 represents an acceleration axis of a particle accelerator and pointing in the direction of particle acceleration. It is appreciated that the direction of acceleration is dependent on the paths of the fast and slow transmission lines, through the two dielectric strips.

In Figure 3, the switch 28 is shown connected to the planar conductor strips 23, 25, and 26 at the respective first ends, i.e. at first end 21 of the Blumlein module. The switch serves to initially connect the outer planar conductor strips 23, 26 to a ground potential and the middle conductor strip 25 to a high voltage source (not shown). The switch 28 is then operated to apply a short circuit at the first end so as to initiate a propagating voltage wavefront through the Blumlein module and produce an output pulse at the second end. In particular, the switch 28 can initiate a propagating reverse polarity wavefront in at least one of the dielectrics from the first end to the second end, depending on whether the Blumlein module is configured for symmetric or asymmetric operation.

When configured for asymmetric operation, as shown in Figure 3, the Blumlein module comprises different dielectric constants and thicknesses (*d₁≠ d*₂) for the dielectric composite layers 24, 27. The asymmetric operation of the Blumlein generates different propagating wave velocities through the dielectric layers. And preferably, the second dielectric composite strip 27 has a substantially lesser propagation velocity than the first dielectric strip 24, such as for example 3:1, where the propagation velocities are defined by *v₂*, and *v₁*, respectively, where *v₂* = (µ₂ε₂*)*^{-0.5} and ν₁ *=*(µ₁ε₁*)*^{-0.5} the permeability, µ*₁,* and the permittivity, ε₁, are the material constants of the first dielectric material; and the permeability, µ₂, and the permittivity, ε₂, are the material constants of the second dielectric material. This can be achieved by selecting for the second dielectric strip a material having a dielectric constant, i.e. µ₁ε₁, which is greater than the dielectric constant of the first dielectric strip, i.e. µ₂ε₂.As shown in Figure 3, for example, the thickness of the first dielectric strip is indicated as *d₁*, and the thickness of the second dielectric strip is indicated as *d*₂, with *d*₂ shown as being greater than *d*₁. By setting *d*₂ greater than *d*₁, the combination of different spacing and the different dielectric constants results in the same characteristic impedance, Z, on both sides of the second planar conductor strip 25. It is notable that although the characteristic impedance may be the same on both halves, the propagation velocity of signals through each half is not necessarily the same.

Figure 4 shows a symmetric Blumlein configuration of the linear accelerator generally indicated at reference character 30, and having a first conductor 34, second conductor 35 and third conductor 36 in alternating layered arrangement with first and second cast dielectric composites 34, 37. However, when the Blumlein module is configured for symmetric operation, the dielectric composite strips 34,37 are of the same dielectric constant, and the width and thickness (*d*₁ = *d*₂) are also the same. In addition, as shown in Figure 4, a magnetic material 40 is also placed in close proximity to the second dielectric composite strip 37 such that propagation of the wavefront is inhibited in that strip. In this manner, the switch is adapted to initiate a propagating reverse polarity wavefront in only the first dielectric composite strip 34.

It is appreciated that the switches 28 and 38 are suitable switches for asymmetric or symmetric Blumlein module operation, such as for example, gas discharge closing switches, surface flashover closing switches, solid state switches, photoconductive switches, etc. And it is further appreciated that the choice of switch and dielectric material types/dimensions can be suitably chosen to enable the compact accelerator to operate at various acceleration gradients, including for example gradients in excess of twenty megavolts per meter. However, lower gradients would also be achievable as a matter of design. It is also appreciated that the Blumlein modules fabricated using the dielectric composite materials of this invention can be stacked to form a single acceleration cell, i.e. comprising at least one additional Blumlein module stacked in alignment with the first Blumlein module. The layers of the stack may have different dielectric constants and different thicknesses.

Generally, the cast dielectric composite material used for the layer 15 in Figure 1, layers 24 and 27 in Figure 3, and layers 34 and 37 in Figure 4 is of a type generally described in U.S. Pat. No. 6,608,760, but fabricated using a casting process to produce a high dielectric constant, preferably from 2 to 40, for high energy particle acceleration, and not by roll forming. As such, the cast dielectric composite comprises at least one organic polymer and at least one particle filler which are cast together in a composite matrix. The particle filler has a dielectric constant greater than the organic polymer. And preferably, the at least one organic polymer has a Tg greater than 140°C and the cast dielectric composite has a dielectric constant that varies less than 15% over a temperature range of from -55 to 125C. Casting such dielectric composite enable the transmission line(s) of the present invention to have an extremely high breakdown voltage that exceeds 100 kV/cm.

Preferably the particle fillers are non-refractory ferroelectric particles having a cubic crystalline structure, which exhibit a high and vary stable dielectric constant over wide ranging temperatures. The term "non-refractory ferroelectric particles" is used herein to refer to particles made from one or more ferroelectric materials. Preferred ferroelectric materials include barium titanate, strontium titanate, barium neodymium titanate, barium strontium titanate, magnesium zirconate, titanium dioxide, calcium titanate, barium magnesium titanate, lead zirconium titanium and mixtures thereof.

Furthermore, the ferroelectric particles useful in the present invention may have particle size ranging from about 20 to about 150 nanometers. It is preferred that the particles are essentially all nanoparticles which means that the particles have a particle size of less than 100 nanometers and preferably a particle size of about 50 nanometers. It Is also preferred that at least 50% of the ferroelectric particles have a size ranging from 50 to 100 nanometers and preferably from 40-60 nanometers. The ferroelectric particles useful in this invention are preferably manufactured by a non-refractory process such as a precipitation process, such as for example 50 nanometer barium or strontium titanate nanoparticles manufactured by TPL, Inc.

The ferroelectric particles are combined with at least one polymer to form dielectric layers. The ferroelectric particles may be present in the dielectric layer in an amount preferably ranging from about 10 to about 80 weight % or preferably from about 15 to 50 vol % and most preferably from about 20 to 40 vol % of the dielectric layer with the remainder of the dielectric layer comprising one or more resin systems. The ferroelectric particles are preferably combined with one or more resins that are commonly used to manufacture dielectric printed circuit board layers. The resins may include material such as silicone resins, cyanate ester resins, epoxy resins, polyamide resins, Kapton material, bismaleimide triazine resins, urethane resins, mixtures of resins and any other resins that are useful in manufacturing dielectric substrate materials. The resin is preferably a high T_{g} resin. By high T_{g}, it is meant that the resin system used should have a cured T_{g} greater than about 140°C. It is more preferred that the resin T_{g} be in excess of 160°C and most preferably in excess of 180°C. A preferred resin system is 406-N Resin manufactured by AlliedSignal Inc.

While the dielectric composite material used in the present invention is substantially the same as that disclosed in U.S. Pat. No. 6,608,760, the method of fabrication in the present invention utilizes a casting method to produce slab layers of cast dielectric composite for use in a linear accelerator.

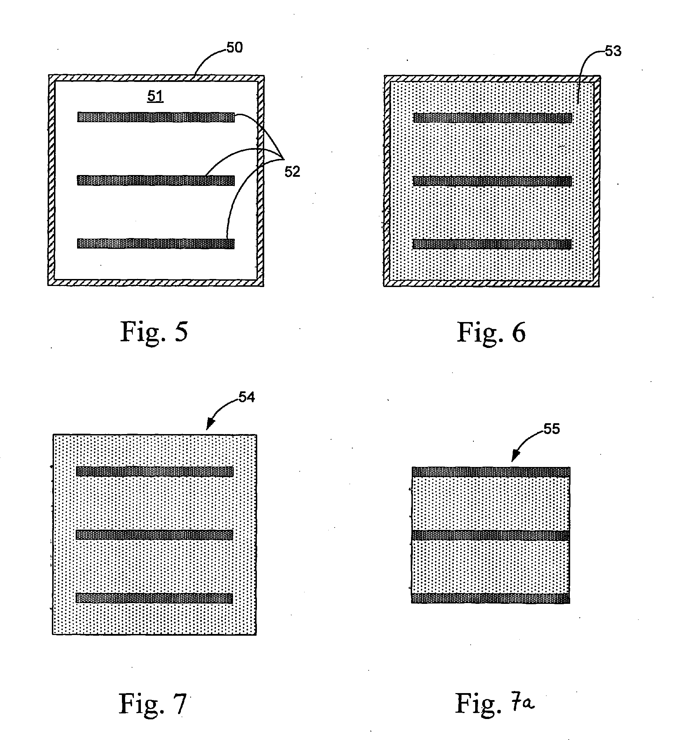

In Figures 5-7, a first exemplary method of fabricating the linear accelerator is shown. A mold form 50 is provided having a mold cavity 51, in which conductors, such as conductor slabs/strips 52 are spacedly arranged. In Figure 6, the yet un-cured and fluid dielectric composite slurry is poured or otherwise introduced into the mold cavity to at least partially immerse the conductors. The dielectric composite is then cured at appropriate temperatures and pressures. The curing temperatures can range, for example, from about 50 to about 150°C and the pressures can vary from about 100 to about 1500 psi. After curing, as shown in Figure 7, a cast monotlithic body 54 is produced substantially in the shape of the mold cavity, with the cast dielectric composite surrounding the conductor electrodes to minimize electrical fields at the edges.

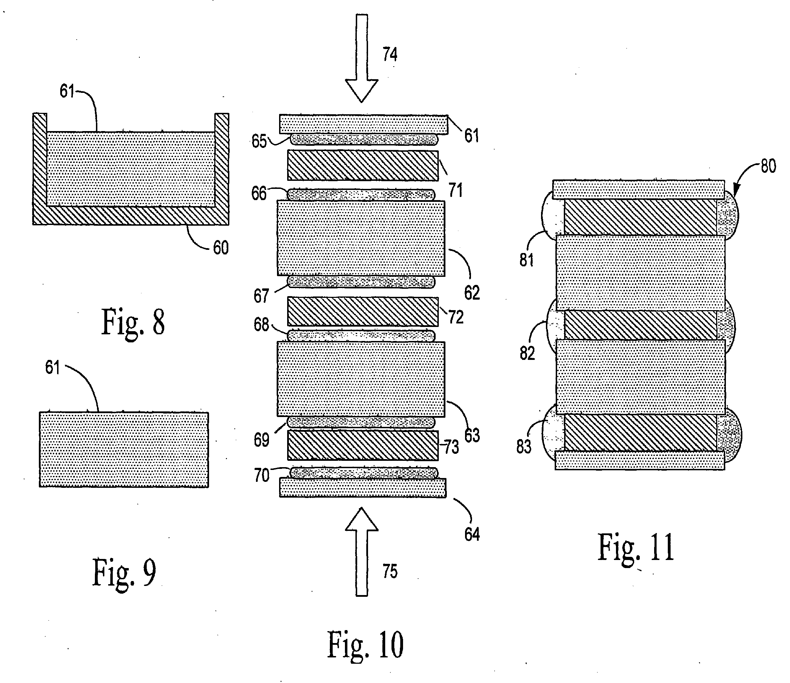

Figures 8-11 show a second exemplary method of fabricating the linear accelerator of the present invention. In Figure 8, a mold form 60 is provided in which the third dielectric composite 61 in slurry form is poured or otherwise introduced, from which the third dielectric composite 61 in slab shape in Figure 9 is cast to take the shape of the mold form. In Figure 10, the cast third dielectric composite 61 is shown layered with an additional cast dielectric composite (reference numerals 62,63, and 64) in alternating arrangement with conductor electrodes 71, 72, and 73. However prior to combining the layers, Figure 10 also shows a second material (reference numerals 65, 66, 67, 68, and 69) with a higher dielectric constant coated over the contact surfaces of the dielectric slabs. The second dielectric material is preferably also a dielectric composite of a type discussed herein, but with a higher concentration of high dielectric constant nanoparticles. The conductors 71, 72, and 73 are then pressed against the second dielectric-coated dielectric 61, 62, 63, and 64 in slab shape, as indicated by arrows 74 and 75, such that the second dielectric material is extruded out from between the conductors and dielectric composite slabs. Preferably the conductive electrodes are coated with one of conducting, semi-conducting, insulating, or semi-insulating layers. Figure 11 shows a final form 80 of the linear accelerator fabricated in this manner, with the second dielectric material 81-83 filling the triple point regions at the separation of the conductor and the dielectric composite slab. In this manner, electric fields may be diminished at the edges to improve performance.

The dielectric layer may include an optional second filler material in order to impart strength to the dielectric layer. Examples of the second filler materials include woven or non-woven materials such as quartz, silica glass, electronic grade glass and ceramic and polymers such as aramids, liquid crystal polymers, aromatic polyamides, or polyesters, particulate materials such as ceramic polymers, and other fillers and reinforcing material that are commonly used to manufacture printed wiring board substrate. The optional second filler material my be present in the dielectric layer in an amount ranging from about 20 to 70 wt % and preferably from an amount ranging from about 35 to about 65 wt %.

The dielectric materials of this invention may include other optional ingredients that are commonly used in the manufacture of dielectric layers. For example, the dielectric particles and/or the second filler material can include a binding agent to include the bond between the filler and the resin material in order to strengthen the dielectric layer. In addition, the resin compositions useful in this invention may include coupling agents such as silane coupling agents, zirconates and titanates. In addition, the resin composition useful in this invention may include surfactants and wetting agents to control particle agglomeration or coated surface appearance. The dielectric layers manufactured using the resin/ferroelectric particle of this invention will preferably have a thickness greater than 1,27mm (0.005 inch).

While particular operational sequences, materials, temperatures, parameters, and particular embodiments have been described and or illustrated, such are not intended to be limiting. Modifications and changes may become apparent to those skilled in the art, and it is intended that the invention be limited only by the scope of the appended claims.

## Claims

1. A compact linear accelerator comprising at least one transmission line(s) (10) extending towards a transverse acceleration axis (16) from a first end (11) to a second end (12) for propagating an electrical wavefront(s) therethrough to impress a pulsed gradient along the acceleration axis (16), each transmission line (10) comprising a first conductor (71) having first and second ends (11, 12) with the second end (12) adjacent the acceleration axis (16), a second conductor (72) adjacent the first conductor (71) and having first and second ends (11, 12) with the second end (12) adjacent the acceleration axis (16), and a cast dielectric composite (62) that fills the space between the first and second conductors (71, 72) and comprising at least one polymer and at least one particle filler having a dielectric constant greater than that of the polymer, wherein
the polymer is an organic polymer; and
the compact linear accelerator being **characterized by**
a second dielectric composite material (81, 82) filling a triple point region at a separation of the cast dielectric composite (62) and one of the first and second conductors (71, 72).

2. The compact linear accelerator of claim 1, wherein the first and second conductors (71, 72) and the cast dielectric composite (62) have parallel plate strip configurations extending longitudinally from the first to second ends (11, 12).

3. The compact linear accelerator of claim 1, wherein two transmission lines (10) extend toward the transverse acceleration axis (16) to form a Blumlein module comprising the first conductor (71), the second conductor (72), the dielectric composite (62) therebetween, a third conductor (73) adjacent the second conductor (72) and having a first end (11) and a second end (12) adjacent the acceleration axis (16), and a third dielectric composite (63), wherein the third dielectric composite (63) fills the space between the second and third conductors (72, 73) and comprises at least one organic polymer and at least one particle filler having a dielectric constant greater than that of the organic polymer.

4. The compact linear accelerator of claim 3, wherein the cast dielectric composite (62) and third dielectric composite (63) have different dielectric constants to form an asymmetric Blumlein.

5. The compact linear accelerator of claim 3, wherein the cast dielectric composite (62) and third dielectric composite (63) have the same dielectric constants to form a symmetric Blumlein.

6. The compact linear accelerator of claim 3, further comprising at least one additional Blumlein module stacked in alignment with the first Blumlein module.

7. The compact linear accelerator of claim 1, wherein the first and second conductors (71, 72) are coated with a material chosen from the group consisting of conductive, semi-conductive/ semi-insulating, and insulating layers.

8. The compact linear accelerator of claim 1, wherein the cast dielectric composite (62) has a thickness greater than 1,27mm (0.005 inch).

9. The compact linear accelerator of claim 1, wherein the cast dielectric composite (62) has a dielectric constant from 2 to 40.

10. The compact linear accelerator of claim 1, wherein the cast dielectric composite (62) has a dielectric constant that varies less than 15% when the composite (62) is subjected to a temperature of from -55 to 125°C.

11. The compact linear accelerator of claim 1, wherein the cast dielectric composite (62) has a breakdown voltage greater than 100 kv/cm,

12. The compact linear accelerator of claim 1, wherein the at least one particle filler has a particle size substantially in the range between approximately 20 and 150 nanometers.

13. The compact linear accelerator of claim 12, wherein the at least one particle filler comprises non-refractory ferroelectric particles having a cubic crystalline structure.

14. The compact linear accelerator of claim 13, wherein the composite (62) includes from about 10 to about 80 percent by weight ferroelectric particles.

15. The compact linear accelerator of claim 13, wherein the ferroelectric particles are barium-based ceramic particles.

16. The compact linear accelerator of claim 13, wherein the ferroelectric particles are selected from the group consisting of barium titanate, strontium titanate, and mixtures thereof.

17. A method of fabricating a linear accelerators, comprising casting at least one dielectric composite (62) in slab(s) shape comprising at least one polymer and at least one particle filler having a dielectric constant greater than that of the polymer wherein
the polymer is an organic polymer; and
the method is **characterized by** comprising the following steps:
coating the cast dielectric composite (62) in slab(s) shape with a second dielectric composite material (66, 67; 81, 82) having a dielectric constant greater than that of the cast dielectric composite (62) in slab(s) shape; and
pressing two conductors (71, 72) against each second dielectric composite material-coated cast dielectric composite (62) in slab(s) shape to extrude the second dielectric composite material (66, 67, 81, 82) out from therebetween to completely fill the triple point region with the second dielectric composite material (66, 67, 81, 82).

18. The method of claim 17, wherein at least two dielectric composite (62, 63) in slab(s) shape are cast and coated with the second dielectric composite material (66, 67, 68, 69, 81, 82, 83), and at least three conductors (71, 72, 73) are arranged and pressed in alternating layered arrangement with the second dielectric composite material-coated cast dielectric composite (62, 63) in slab(s) shape.

19. The method of claim 18, wherein the second dielectric composite material (66, 67, 81, 82) further comprises a concentration of high dielectric constant nanoparticles higher than the one of the cast dielectric composite (62).

20. The method of claim 17, further comprising:
positioning at least one of a third conductor(s) (52) in a mold cavity (51);
filling the mold cavity (51) with a third dielectric composite (61) comprising at least one organic polymer(s) and at least one particle filler(s) having a dielectric constant greater than that of the organic polymer(s), to at least partially immerse the third conductor(s) (52) in the third dielectric composite (61); and
curing the third dielectric composite (61) to integrally cast the third dielectric composite (61) with the third conductor(s) (52).

21. The method of claim 20, wherein at least two of said third conductors (52) are spaced from each other in the mold cavity (51) to produce an alternating layered arrangement with the cast third dielectric composite (61).

## Patentansprüche

1. Kompakter linearer Beschleuniger, der mindestens eine Übertragungsleitung(en) (10) umfasst, die sich in Richtung einer transversalen Beschleunigungsachse (16) von einem ersten Ende (11) zu einem zweiten Ende (12) erstreckt, um eine elektrische Wellenfront(en) dort hindurch auszubreiten, um einen gepulsten Gradienten entlang der Beschleunigungsachse (16) aufzudrücken, wobei jede Übertragungsleitung (10) einen ersten Leiter (71) mit ersten und zweiten Enden (11, 12) umfasst, wobei sich das zweite Ende (12) angrenzend an die Beschleunigungsachse (16) angeordnet befindet, mit einem zweiten Leiter (72) angrenzend an den ersten Leiter (71) und mit ersten und zweiten Enden (11, 12), wobei das zweite Ende (12) angrenzend an die Beschleunigungsachse (16) angeordnet ist, und mit einem gegossenen dielektrischen Verbundstoff (62), der den Zwischenraum zwischen den ersten und zweiten Leitern (71, 72) füllt und mindestens ein Polymer und mindestens einen Partikelfüller mit einer Dielektrizitätskonstante umfasst, die höher ist als die des Polymers; wobei:
es sich bei dem Polymer um ein organisches Polymer handelt; und
wobei der kompakte lineare Beschleuniger **gekennzeichnet ist durch** einen zweiten dielektrischen Verbundstoff (81, 82), der eine Tripelpunktregion an einer Trennlinie des gegossenen dielektrischen Verbundstoffs (62) und eines der ersten und zweiten Leiter (71, 72) füllt.

2. Kompakter linearer Beschleuniger nach Anspruch 1, wobei die ersten und zweiten Leiter (71, 72) und der gegossene dielektrische Verbundstoff (62) Parallelplatten-Streifenkonfigurationen aufweisen, die sich von den ersten zu den zweiten Enden (11, 12) longitudinal erstrecken.

3. Kompakter linearer Beschleuniger nach Anspruch 1, wobei sich zwei Übertragungsleitungen (10) in Richtung der transversalen Beschleunigungsachse (16) erstrecken, so dass ein Blumlein-Modul gebildet wird, das den ersten Leiter (71), den zweiten Leiter (72), dazwischen den dielektrischen Verbundstoff (62), einen dritten Leiter (73) angrenzend an den zweiten Leiter (72) umfasst, und mit einem ersten Ende (11) und einem zweiten Ende (12) angrenzend an die Beschleunigungsachse (16), und mit einem dritten dielektrischen Verbundstoff (63), wobei der dritte dielektrische Verbundstoff (63) den Zwischenraum zwischen den zweiten und dritten Leitern (72, 73) füllt und mindestens ein organisches Polymer und mindestens einen Partikelfüller umfasst, der eine Dielektrizitätskonstante aufweist, die höher ist als die des organischen Polymers.

4. Kompakter linearer Beschleuniger nach Anspruch 3, wobei der gegossene dielektrische Verbundstoff (62) und der dritte dielektrische Verbundstoff (63) unterschiedliche Dielektrizitätskonstanten zur Bildung eines asymmetrischen Blumleins aufweisen.

5. Kompakter linearer Beschleuniger nach Anspruch 3, wobei der gegossene dielektrische Verbundstoff (62) und der dritte dielektrische Verbundstoff (63) übereinstimmende Dielektrizitätskonstanten zur Bildung eines symmetrischen Blumleins aufweisen.

6. Kompakter linearer Beschleuniger nach Anspruch 3, wobei dieser ferner mindestens ein zusätzliches Blumlein-Modul umfasst, das in Ausrichtung mit dem ersten Blumlein-Modul gestapelt ist.

7. Kompakter linearer Beschleuniger nach Anspruch 1, wobei die ersten und zweiten Leiter (71, 72) mit einem Material überzogen sind, das aus der Gruppe ausgewählt wird, die folgendes umfasst: leitfähige, halbleitfähige/halbisolierende und isolierende Schichten umfasst.

8. Kompakter linearer Beschleuniger nach Anspruch 1, wobei der gegossene dielektrische Verbundstoff (62) eine größere Dicke als 1,27 mm (0,005 Zoll) aufweist.

9. Kompakter linearer Beschleuniger nach Anspruch 1, wobei der gegossene dielektrische Verbundstoff (62) eine Dielektrizitätskonstante zwischen 2 und 40 aufweist.

10. Kompakter linearer Beschleuniger nach Anspruch 1, wobei der gegossene dielektrische Verbundstoff (62) eine Dielektrizitätskonstante aufweist, die um weniger als 15 % variiert, wenn der Verbundstoff (62) einer Temperatur zwischen -55 °C und 125 °C ausgesetzt wird.

11. Kompakter linearer Beschleuniger nach Anspruch 1, wobei der gegossene dielektrische Verbundstoff (62) eine Durchbruchspannung von über 100 kV/cm aufweist.

12. Kompakter linearer Beschleuniger nach Anspruch 1, wobei der mindestens eine Partikelfüller eine Teilchengröße aufweist, die im Wesentlichen im Bereich von ungefähr 20 bis 150 Nanometern liegt.

13. Kompakter linearer Beschleuniger nach Anspruch 12, wobei der mindestens eine Partikelfüller nicht feuerfeste, ferroelektrische Teilchen mit einer kubischen kristallinen Struktur umfasst.

14. Kompakter linearer Beschleuniger nach Anspruch 13, wobei der Verbundstoff (62) zwischen etwa 10 und etwa 80 Gewichtsprozent ferroelektrische Teilchen aufweist.

15. Kompakter linearer Beschleuniger nach Anspruch 13, wobei es sich bei den ferroelektrischen Teilchen um Keramikteilchen auf Bariumbasis handelt.

16. Kompakter linearer Beschleuniger nach Anspruch 13, wobei die ferroelektrischen Teilchen aus der Gruppe ausgewählt werden, die folgendes umfasst: Bariumtitanat, Strontiumtitanat und Mischungen dieser.

17. Verfahren zum Herstellen eines linearen Beschleunigers, wobei das Verfahren das Gießen mindestens eines dielektrischen Verbundstoffs (62) in Plattenform umfasst, der mindestens ein Polymer umfasst und mindestens einen Partikelfüller mit einer Dielektrizitätskonstante, die höher ist als die des Polymers, wobei:
es sich bei dem Polymer um ein organisches Polymer handelt; und
wobei das Verfahren **dadurch gekennzeichnet ist, dass** es die folgenden Schritte umfasst:
das Überziehen des gegossenen dielektrischen Verbundstoffs (62) in Plattenform mit einem zweiten dielektrischen Verbundstoff (66, 67, 81, 82) mit einer Dielektrizitätskonstante, die höher ist als die des gegossenen dielektrischen Verbundstoffs (62) in Plattenform; und
das Drücken von zwei Leitern (71, 72) gegen jeden mit dem zweiten dielektrischen Verbundstoff überzogenen gegossenen dielektrischen Verbundstoff (62) in Plattenform, um den zweiten dielektrischen Verbundstoff (66, 67, 81, 82) aus der Position dazwischen zu extrudieren, um die Tripelpunktregion vollständig mit dem zweiten dielektrischen Verbundstoff (66, 67, 81, 82) zu füllen.

18. Verfahren nach Anspruch 17, wobei zumindest zwei dielektrische Verbundstoffe (62, 63) in Plattenform gegossen und mit dem zweiten dielektrischen Verbundstoff (66, 67, 68, 69, 81, 82, 83) überzogen werden, und wobei mindestens drei Leiter (71, 72, 73) in einer wechselweisen schichtweisen Anordnung mit dem mit dem zweiten dielektrischen Verbundstoff überzogenen gegossenen dielektrischen Verbundstoff (62, 62) in Plattenform angeordnet und eingedrückt sind.

19. Verfahren nach Anspruch 18, wobei der zweite dielektrische Verbundstoff (66, 67, 81, 82) ferner eine Konzentration von Nanopartikeln mit hoher Dielektrizitätskonstante umfasst, die höher ist als die des gegossenen dielektrischen Verbundstoffs (62).

20. Verfahren nach Anspruch 17, wobei dieses ferner folgendes umfasst:
das Positionieren mindestens eines dritten Leiters (52) in einem Formenhohlraum (51);
das Füllen des Formenhohlraums (51) mit einem dritten dielektrischen Verbundstoff (61), der mindestens ein organisches Polymer und mindestens einen Partikelfüller mit einer Dielektrizitätskonstante umfasst, die höher ist als die des organischen Polymers bzw. der organischen Polymere, um zumindest teilweise den bzw. die dritten Leiter (52) in den dritten dielektrischen Verbundstoff (61) einzutauchen; und
das Härten des dritten dielektrischen Verbundstoffs (61) zum integralen Gießen des dritten dielektrischen Verbundstoffs (61) mit dem bzw. den dritten Leiter(n) (52).

21. Verfahren nach Anspruch 20, wobei mindestens zwei des genannten dritten Leiters (52) mit Zwischenabstand zueinander in dem Formenhohlraum (51) angeordnet sind, so dass eine wechselweise schichtweise Anordnung mit dem gegossenen dritten dielektrischen Verbundstoff (61) erzeugt wird.

## Revendications

1. Accélérateur linéaire compact comprenant au moins une ligne de transmission (10) s'étendant vers un axe d'accélération transversal (16) d'une première extrémité (11) vers une seconde extrémité (12) pour propager une onde électrique à travers pour imprimer un gradient pulsé le long de l'axe d'accélération (16), chaque ligne de transmission (10) comprenant un premier conducteur (71) ayant des première et seconde extrémités (11, 12), la seconde extrémité (12) étant adjacente à l'axe d'accélération (16), un deuxième conducteur (72) adjacent au premier conducteur (71) et ayant des première et seconde extrémités (11, 12), la seconde extrémité (12) étant adjacente à l'axe d'accélération (16), et un composite diélectrique moulé (62) qui remplit l'espace entre les premier et deuxième conducteurs (71, 72) et comprenant au moins un polymère et au moins une charge de particules ayant une constante diélectrique supérieure à celle du polymère, dans lequel
le polymère est un polymère organique ; et
l'accélérateur linéaire compact étant **caractérisé par**
un deuxième matériau composite diélectrique (81, 82) remplissant une région à triple point au niveau d'une séparation du composite diélectrique moulé (62) et de l'un des premier et deuxième conducteurs (71, 72).

2. Accélérateur linéaire compact selon la revendication 1, dans lequel les premier et deuxième conducteurs (71, 72) et le composite diélectrique moulé (62) ont des configurations en bande à plaques parallèles s'étendant longitudinalement de la première vers la seconde extrémités (11, 12).

3. Accélérateur linéaire compact selon la revendication 1, dans lequel deux lignes de transmission (10) s'étendent vers l'axe d'accélération transversal (16) pour former un module Blumlein comprenant le premier conducteur (71), le deuxième conducteur (72), le composite diélectrique (62) entre eux, un troisième conducteur (73) adjacent au deuxième conducteur (72) et ayant une première extrémité (11) et une seconde extrémité (12) adjacentes à l'axe d'accélération (16), et un troisième composite diélectrique (63), dans lequel le troisième composite diélectrique (63) remplit l'espace entre les deuxième et troisième conducteurs (72, 73) et comprend au moins un polymère organique et au moins une charge de particules ayant une constante diélectrique supérieure à celle du polymère organique.

4. Accélérateur linéaire compact selon la revendication 3, dans lequel le composite diélectrique moulé (62) et le troisième composite diélectrique (63) ont des constantes diélectriques différentes pour former un Blumlein asymétrique.

5. Accélérateur linéaire compact selon la revendication 3, dans lequel le composite diélectrique moulé (62) et le troisième composite diélectrique (63) ont les mêmes constantes diélectriques pour former un Blumlein symétrique.

6. Accélérateur linéaire compact selon la revendication 3, comprenant en outre au moins un module Blumlein supplémentaire empilé en alignement avec le premier module Blumlein.

7. Accélérateur linéaire compact selon la revendication 1, dans lequel les premier et deuxième conducteurs (71, 72) sont recouverts d'un matériau choisi parmi le groupe constitué de couches conductrices, semi-conductrices / semi-isolantes et isolantes.

8. Accélérateur linéaire compact selon la revendication 1, dans lequel le composite diélectrique moulé (62) a une épaisseur supérieure à 1,27 mm (0,005 pouce).

9. Accélérateur linéaire compact selon la revendication 1, dans lequel le composite diélectrique moulé (62) a une constante diélectrique comprise entre 2 et 40 mm.

10. Accélérateur linéaire compact selon la revendication 1, dans lequel le composite diélectrique moulé (62) a une constante diélectrique qui varie de moins de 15 % lorsque le composite (62) est soumis à une température comprise entre -55 et 125 °C.

11. Accélérateur linéaire compact selon la revendication 1, dans lequel le composite diélectrique moulé (62) a une épaisseur disruptive supérieure à 100 kV/cm.

12. Accélérateur linéaire compact selon la revendication 1, dans lequel au moins une charge de particules a une taille de particules sensiblement dans la plage comprise entre environ 20 et 150 nanomètres.

13. Accélérateur linéaire compact selon la revendication 12, dans lequel l'au moins une charge de particules comprend des particules ferroélectriques non réfractaires ayant une structure cristalline cubique.

14. Accélérateur linéaire compact selon la revendication 13, dans lequel le composite (62) comprend d'environ 10 à environ 80 pour cent en poids de particules ferroélectriques.

15. Accélérateur linéaire compact selon la revendication 13, dans lequel les particules ferroélectriques sont des particules céramiques à base de baryum.

16. Accélérateur linéaire compact selon la revendication 13, dans lequel les particules ferroélectriques sont choisies dans le groupe constitué de titanate de baryum, de titanate de strontium et de leurs mélanges.

17. Procédé de fabrication d'un accélérateur linéaire, comprenant l'étape consistant à mouler au moins un composite diélectrique (62) en forme de dalle comprenant au moins un polymère et au moins une charge de particules ayant une constante diélectrique supérieure à celle du polymère, dans lequel
le polymère est un polymère organique ; et
le procédé est **caractérisé en ce qu'**il comprend les étapes consistant à :
recouvrir le composite diélectrique moulé (62) en forme de dalle avec un deuxième matériau composite diélectrique (66, 67, 81, 82) ayant une constante diélectrique supérieure à celle du composite diélectrique moulé (62) en forme de dalle ; et
presser deux conducteurs (71, 72) contre un composite diélectrique moulé recouvert de matériau composite diélectrique (62) en forme de dalle sur deux pour extruder le deuxième matériau composite diélectrique (66, 67, 81, 82) entre eux pour remplir complètement la région à triple point avec le deuxième matériau composite diélectrique (66, 67,81,82).

18. Procédé selon la revendication 17, dans lequel au moins deux composites diélectriques (62, 63) en forme de dalle sont moulés et recouverts avec le deuxième matériau composite diélectrique (66, 67, 68, 69, 81, 82, 83), et au moins trois conducteurs (71, 72, 73) sont agencés et pressés en un agencement de couches alternées avec le second composite diélectrique recouvert de matériau composite diélectrique (62, 63) en forme de dalle.

19. Procédé selon la revendication 18, dans lequel le deuxième matériau diélectrique composite (66, 67, 81, 82) comprend en outre une concentration de nanoparticules à constante diélectrique élevée supérieure à celle du composite diélectrique moulé (62).

20. Procédé selon la revendication 17, comprenant en outre les étapes consistant à :
positionner au moins l'un de troisièmes conducteurs (52) dans une cavité de moule (51) ;
remplir la cavité de moule (51) avec un troisième composite diélectrique (61) comprenant au moins un polymère organique et au moins une charge de particules ayant une constante diélectrique supérieure à celle du polymère organique, pour au moins partiellement immerger le troisième conducteur (52) dans le troisième composite diélectrique (61) ; et
faire durcir le troisième composite diélectrique (61) pour mouler intégralement le troisième composite diélectrique (61) avec le troisième conducteur (52).

21. Procédé selon la revendication 20, dans lequel, au moins deux desdits troisièmes conducteurs (52) sont espacées l'un de l'autre dans la cavité du moule (51) pour produire un agencement de couches alternées avec le troisième composite diélectrique moulé (61).
